**Europäisches Patentamt**

**European Patent Office**

**Office européen des brevets**

(19)

(11) Veröffentlichungsnummer: **0 141 866**
**A1**

# (12) EUROPÄISCHE PATENTANMELDUNG

(21) Anmeldenummer: **83111262.8**

(22) Anmeldetag: **11.11.83**

(51) Int. Cl.⁴: **B 60 B 33/02**

(43) Veröffentlichungstag der Anmeldung: **22.05.85**
**Patentblatt 85/21**

(84) Benannte Vertragsstaaten: **AT BE CH DE FR GB IT LI LU NL SE**

(71) Anmelder: **Albert Schulte Söhne GmbH. & Co.,**
**Remscheider Strasse 25, D-5632 Wermelskirchen (DE)**

(72) Erfinder: **Sachser, Herbert, Vorm Eickerberg 4,**
**D-5632 Wermelskirchen (DE)**
Erfinder: **Schröder, Bernd, Rich.-Wagner-Strasse 13,**
**D-5632 Wermelskirchen 1 (DE)**

(74) Vertreter: **Mentzel, Norbert, Dipl.-Phys. et al,**
**Patentanwälte Dipl.-Phys. Buse Dipl.-Phys. Mentzel**
**Dipl.-Ing. Ludewig Unterdörnen 114,**
**D-5600 Wuppertal 2 (DE)**

(54) **Lenkrolle für verfahrbare Gegenstände.**

(57) Die Lenkrolle ist mit einer Feststelleinrichtung zum Blokkieren des Laufrades (22) und/oder der Schwenkbewegung der Laufradgabel (10) versehen. Dabei ist in deren Höhlung unter dem Gabelrücken (11) ein zweiseitiger, einen Bremsarm und einen Sperrarm (25) aufweisender, im Lösesinn federbelasteter Blockierhebel (23) schwenkbar gelagert. Daran ist ein Fußschalthebel (37) angelenkt, der im Bereich dieser Gelenkverbindung einen gegen eine Stützkurve des Gabelrückens (11) anliegenden Stütznocken (39) aufweist. Dieser Fußschalthebel (37) ist in eine sowohl das Laufrad (22) als auch die Radgabel (10) gegenüber einer Drehlagerschale (19) des Gabelrückenlagers (14) blockierende Sperrlage und in eine Freigabelage überführbar. Um insbesondere die Schwenkbewegung durch die Feststelleinrichtung selbst nach längerem Gebrauch der Lenkrolle (22) zu gewährleisten, weist der Blockierhebel (23) an seinem die Schwenkbewegung feststellenden Sperrarm (25) einen im Sperrsinn elastisch belasteten Haltezapfen (30) auf, der in Ausnehmungen (35) der Drehlagerschale (19) einrückbar ist.

0141866

PATENTANWÄLTE

DIPL.-PHYS. BUSE · DIPL.-PHYS. MENTZEL · DIPL.-ING. LUDEWIG
Unterdörnen 114 · Postfach 200210 · 5600 Wuppertal 2 · Fernruf (0202) 55 70 22/23/24 · Telex 8 591 606 wpat

37                                    5600 Wuppertal 2, den

Kennwort: "Federbolzenfeststeller"


Albert Schulte Söhne GmbH & Co.,
Remscheider Str. 25, 5632 Wermelskirchen


---

Lenkrolle für verfahrbare Gegenstände

---


Die Erfindung betrifft eine Lenkrolle für verfahrbare Gegenstände, mit einer Feststelleinrichtung zum Blockieren des Laufrades und/oder der Schwenkbewegung der Laufradgabel, in deren Höhlung unter dem Gabelrücken ein zweiseitiger, einen Bremsarm und einen Sperrarm aufweisender, im Lösesinne federbelasteter Blockierhebel schwenkbar gelagert ist, der über einen daran angelenkten, im Bereich dieser Gelenkverbindung einen gegen eine Stützkurve des Gabelrückens anliegenden Stütznocken aufweisenden Fußschalthebel in eine sowohl das Laufrad als auch die Radgabel gegenüber einer Drehlagerschale des Gabelrückenlagers blockierende Sperrlage und in eine Freigabelage überführbar ist.

Bei einer bekannten Lenkrolle der vorgenannten Art ist die Drehlagerschale auf ihrer unterseitigen Ringfläche mit Sperrzähnen versehen, während der ein Ringsegment aufweisende Sperrarm an diesem Ringsegment Gegenzähne aufweist, die zur Sperrung der Schwenkbewegung in die Verzahnung der Drehlagerschale eingreifen. Diese allgemein übliche Verzahnung zwischen der Drehlagerschale

-2-

und dem Sperrarm des Blockierhebels stellt die Schwenkbewegung der Radgabel zunächst auch sicher fest. Da es
sich jedoch wegen der Zahnlückenauffindung um eine
Spitzzahnverzahnung mit Zähnen dreieckigen Querschnitts
handelt, nützt sich diese Verzahnung bei längerem Gebrauch
derart ab, daß eine sichere Richtungsfeststellung der
Lenkrolle nicht mehr gewährleistet ist.

Die Aufgabe der Erfindung besteht darin, eine Lenkrolle
der eingangs genannten Art derart zu verbessern, daß
Verschleißerscheinungen ohne Auswirkung auf die Richtungsfeststellung der Feststelleinrichtung bleiben und
selbst nach längerem Gebrauch eine Richtungsfeststellung
der Lenkrolle sichergestellt ist.

Diese Aufgabe ist erfindungsgemäß dadurch gelöst, daß
der Blockierhebel an seinem die Schwenkbewegung feststellenden Sperrarm einen im Sperrsinn elastisch belasteten Haltezapfen aufweist, der in Ausnehmungen der
Lagerschale einrückbar ist. Dadurch läßt sich einerseits
der Haltezapfen und die Ausnehmung derart ausbilden,
daß der Haltezapfen von der Ausnehmung unverrückbar umfaßt wird, und durch die elastische Belastung des Haltezapfens andererseits wird in jedem Fall nach Betätigung
des Fußschalthebels selbst dann eine Sperrbereitschaftslage erzielt, wenn während des Niederdrückens des Fußschalthebels der Haltezapfen nicht sofort in eine Ausnehmung eindringen kann. Dabei ist der Haltezapfen vorteilhaft aus einem Stufenbolzen gebildet, dessen abgestufter Schaft von einer Druckfeder umfaßt ist, die sich
einerends an der Abstufung des Haltezapfens und andernends am Grund einer Aufnahmebohrung im Blockierhebel
abstützt und der abgestufte Schaft ein Loch im Blockierhebel durchdringt, das von einem Haltekopf des Schaftes
hintergriffen ist.

Obschon es möglich ist, die Ausnehmungen als die Haltezapfen umfassende Sacklöcher in der Lagerschale auszubilden, so ist es doch insbesondere fertigungstechnisch
vorteilhaft, wenn die Ausnehmungen in der Lagerschale
von an deren Randbereich auf gleichem Durchmesser gleichmäßig verteilt angeordneten, zahnlückenartigen, nach
außen offenen Schlitzen gebildet sind.

Bei Verwendung nur eines einzigen, mit dem Blockierhebel drehgelenkig verbundenen Fußschaltschalthebels,
ist entweder nur eine Blockierlage oder eine Freigabelage möglich. D.h., daß entweder sowohl die Radgabel
verschwenkbar als auch das Laufrad ungehindert drehbar
ist oder aber daß sowohl die Radgabel als auch das Laufrad in bezug auf ihre Drehbewegung festgestellt sind.
In vielen Fällen ist es jedoch vorteilhaft, wenn zwar
die Radgabel zur Richtungsfeststellung arretiert ist,
während das Laufrad sich noch frei drehen kann. Um eine
derartige Funktion der erfindungsgemäßen Lenkrolle zu
gewährleisten, ist nach einem weiteren Ausgestaltungsmerkmal der Erfindung der am Bremsarm angelenkte Fußschalthebel aus einem die Sperrung der Schwenkbewegung
bewirkenden Schwenkfußhebel und aus einem die Feststellung des Laufrades bewirkenden Bremsfußhebel gebildet. Dabei sind der Schwenkfußhebel und der Bremsfußhebel vorzugsweise auf gemeinsamer Anlenkachse gelagert, und der Stütznocken des Bremsfußhebels weist
einen vom Nockenscheitel bis zur Anlenkachse größeren
Abstand auf als der Sütznocken des Schwenkfußhebels.
Dadurch erfolgt zwar beim Niederdrücken des Schwenkfußhebels eine Sperrverbindung zwischen dem Haltezapfen und der Lagerschale, während jedoch der Bremsarm des Blockierhebels das Laufrad unbehelligt läßt. Erst wenn der Bremsfußhebel niedergedrückt wird, erfolgt auch neben der Blockierung der Schwenkbewegung eine Feststellung des Laufrades. Dabei lassen sich der Schwenkfußhebel und der Bremsfußhebel vorteilhaft nebeneinander auf der Anlenkachse lagern.

Damit jedoch Verwechslungen beider Hebel vermieden werden, ist nach einem weiteren Ausgestaltungsmerkmal der Erfindung der Schwenkfußhebel gabelartig gestaltet und nimmt in seinem Freiraum zwischen den durch eine Wandbrücke verbundenen Gabelschenkeln den gegenüber dem Schwenkfußhebel verkürzten Bremsfußhebel auf.

Die Erfindung ist in Ausführungsbeispielen auf der Zeichnung dargestellt und wird nachfolgend näher erläutert. Es zeigen:

Fig. 1 die erfindungsgemäße Lenkrolle in einer Seitenansicht mit oberseitig aufgebrochenem Längsschnitt, deren Feststelleinrichtung einen einzigen Fußschalthebel umfaßt und in der Freigabelage dargestellt ist,

Fig. 2 die aus Fig. 1 ersichtliche Feststelleinrichtung in Blockierlage,

Fig. 3 eine Untersicht des Drehlagers der Lenkrolle in einem Schnitt nach der Linie III-III von Fig. 1, Fig. 4 ein weiteres Ausführungsbeispiel einer Lenkrolle in einer Fig. 1 analogen Seitenansicht, bei der die sich in Freigabelage befindende Feststelleinrichtung als Fußschalthebel einen Schwenkfußhebel und einen daneben angeordneten Bremsfußhebel umfaßt,

Fig. 5 die aus Fig. 4 ersichtliche Feststelleinrichtung, die sich aufgrund des niedergedrückten Schwenkfußhebels in einer die Schwenkbewegung der Radgabel blockierenden Lage befindet,

Fig. 6 die aus den Fig. 4 und 5 ersichtliche Feststelleinrichtung, die sich aufgrund des ebenfalls niedergedrückten Bremsfußhebels in einer sowohl die Schwenkbewegung der Radgabel als auch die Drehbewegung des Laufrades blockierenden Lage befindet,

Fig. 7 die Trittenden des aus dem Bremsfußhebel und dem daneben angeordneten Schwenkfußhebel gebildeten Fußschalthebels in einer Draufsicht,

Fig. 8 ein drittes Ausführungsbeispiel einer Lenkrolle in einer den Fig. 1 und 4 analogen Seitenansicht, bei der die sich in Freigabelage befindende Feststelleinrichtung eben-

-6-

falls einen Schwenkfußhebel und
einen darin angeordneten Bremsfußhebel umfaßt,

Fig. 9 die aus Fig. 8 ersichtliche Feststelleinrichtung, die sich infolge
des niedergedrückten Schwenkfußhebels in einer die Schwenkbewegung
der Radgabel blockierenden Lage
befindet,

Fig. 10 die aus Fig. 8 und 9 ersichtliche
Feststelleinrichtung, die sich
infolge des ebenfalls niedergedrückten Bremsfußhebels in einer
sowohl die Schwenkbewegung der Radgabel als auch die Drehbewegung des
Laufrades blockierenden Lage befindet,

Fig. 11 die Trittenden von Bremsfußhebel und
Schwenkfußhebel in einer Draufsicht,
wobei der Schwenkfußhebel den Bremsfußhebel umgreift.

Bei den aus der Zeichnung ersichtlichen Lenkrollen ist
die Radgabel 10 an ihrem Gabelrücken 11 mit einer kreisförmigen, zur Laufradachse 12 versetzten Aufwölbung 13
versehen, die zur Bildung eines Gabelrückenlagers 14
zwischen eine Abdeckschale 15 und eine Kugellagerschale 16 greift. Die Abdeckschale 15 und die Kugellagerschale 16 sind konzentrisch miteinander verbunden
und stützen sich über Kugelkränze 17 und 18 an der
Aufwölbung 13 des Gabelrückens 11 ab. Unterhalb der Kugellagerschale 16 befindet sich eine Drehlagerschale 19, während sich oberhalb der Abdeckschale 15 eine Fußplatte 20 befindet, die der Befestigung der Lenkrolle unter einem Fahrgestell eines Wagens od.dgl. dient. Die Fußplatte 20, die Abdeckschale 15, die Kugellagerschale 16 und die Drehlagerschale 19 sind unter Zwischenschluß der Aufwölbung 13 des Gabelrückens 11 und der zugehörigen Kugelkränze 17 und 18 über einen Nietzapfen 21 drehfest miteinander verbunden.

Statt eines Nietzapfens zum Zusammenhalt des Gabelrückenlagers 14 wäre es auch denkbar, die Abdeckschale 15, die Kugellagerschale 16 und die Drehlagerschale 19 ohne die Fußplatte 20 miteinander durch einen nicht dargestellten Hohlniet zu verbinden, durch dessen inneren Freiraum ein Befestigungsbolzen geführt sein könnte, um die Lenkrolle mit dem verfahrbaren Gegenstand zu verbinden.

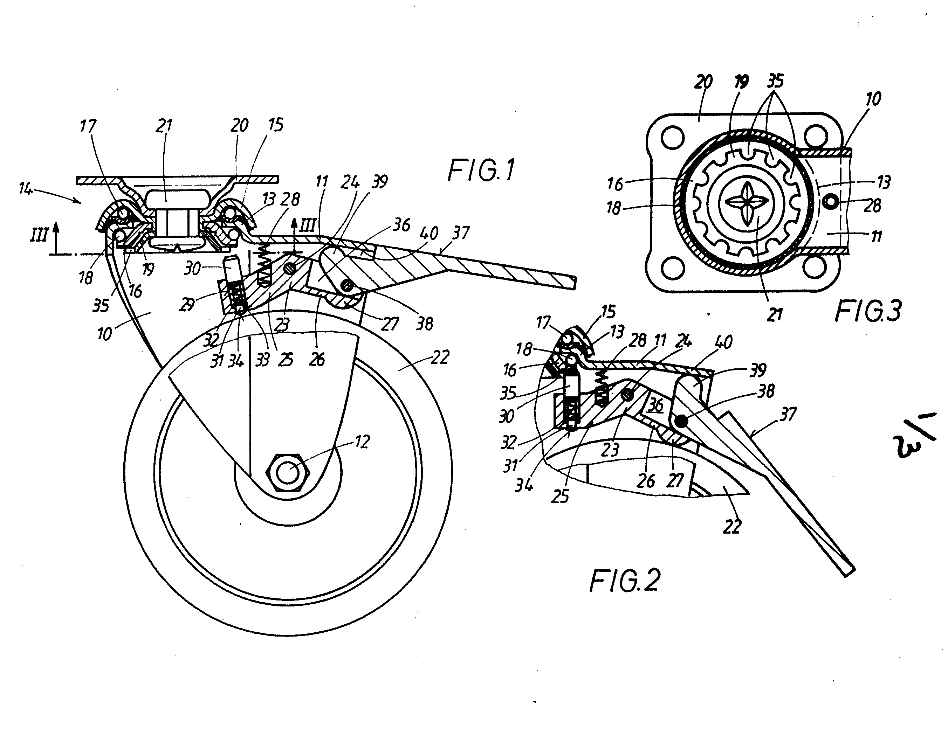

Die Drehlagerschale 19 ragt in die von den Schenkeln der Radgabel 10, dem Gabelrücken 11 und dem auf der Achse gelagerten Laufrad 22 gebildete Höhlung unterhalb des Gabelrückens ein. In dieser Höhlung ist ein zweiseitiger Blockierhebel 23 angeordnet, der auf einer die Radgabelhöhlung durchquerenden und in den Schenkeln der Radgabeln gehalterten Achse 24 gelagert ist. Dieser Blockierhebel ragt auf der einen Seite seiner Achse 24 mit einem Sperrarm 25 zur Drehlagerschale 19 hin und besitzt auf der anderen Seite seiner Achse 23 einen Bremsarm 26, dessen Unterseite einen an die Lauffläche des Laufrades 22 anpreßbaren Bremswulst 27 aufweist. Versetzt zur Achse 24 ist zwischen dem Sperrarm 25 und dem Gabelrücken 11 eine Rückstellfeder 28 angeordnet, durch welche der Blockierhebel 23 beim Gebrauch der Lenkrolle in der aus den Fig. 1, 4 und 8 ersichtlichen Lage gehalten wird. Am freien Ende des Sperrarmes 25 befindet sich eine senkrecht zur horizontalen Achse 24 angeordnete Aufnahmebohrung 29, in welche ein als Stufenbolzen ausgebildeter Haltezapfen 30 schließend eingepaßt ist, dessen abgestufter Schaft 31 von einer Druckfeder 32 umfaßt ist. Der Schaft 31 durchdringt unterseitig ein Loch 33, das eine durchmesserkleinere Fortsetzung der Aufnahmebohrung 29 im Sperrarm 25 des Blockierhebels 23 darstellt. Der aus dem Loch 33 ausragende Teil des Schaftes 31 trägt einen Haltekopf 34, so daß die sich einerends am Grund der Aufnahmebohrung 29 abstützende Druckfeder 32, die sich andernends an der Abstufung des Haltezapfens 30 abstützt, diesen Haltezapfen nicht über die aus den Fig. 1, 4 und 8 ersichtliche Lage hinaus aus der Aufnahmebohrung 29 ausdrücken kann. Oberhalb des Haltezapfens 30 befinden sich im Randbereich der Drehlagerschale 19 Ausnehmungen 35, deren Abmessungen derart gewählt sind, daß jede dieser Ausnehmungen den Haltezapfen 30 aufnehmen kann. Dabei sind die im Randbereich der Drehlagerschale 19 angeordneten Ausnehmungen 35 durch zahnlückenartig nach außen offene Schlitze gebildet, die sich auf gleichem Durchmesser gleichmäßig verteilt am Randbereich der Drehlagerschale 19 befinden, wie insbesondere aus Fig. 3 ersichtlich ist. Der Bremsarm 26 des Blockierhebels 23 weist an seinem freien Ende eine endseitig und nach oben hin offene Vertiefung 36 auf, in die bei dem aus Fig. 1 ersichtlichen Ausführungsbeispiel ein einziger Fußschalthebel 37 eingreift, der mit den die Vertiefung 36 seitlich verschließenden Seitenwangen des Bremsarmes 26 über eine Anlenkachse 38 schwenkbar verbunden ist. Im Bereich dieser Anlenkachse 38 weist der Fußschalthebel 37 einen Stütznocken 39 auf, der mit einer Stützkurve 40 des Gabel-

0141866

rückens 11 in Anlage ist, die bei dem aus Fig. 1 dargestellten Ausführungsbeispiel aus einem gegenüber dem
Gabelrücken 11 geneigt verlaufenden Flächenfortsatz
besteht. Wenn nun bei dem aus den Fig. 1 und 2 ersichtlichen Ausführungsbeispiel der zunächst in Freigabelage durch die Rückstellfeder 28 gehaltene Fußschalthebel 37 nach unten im Uhrzeigersinn um die Anlenkachse 38 geschwenkt wird und die aus Fig. 2 ersichtliche
Stützlage gelangt, so wird durch den Stütznocken 39
die Anlenkachse 38 ebenfalls im Uhrzeigersinn um die
Achse 24 verschwenkt, wodurch einerseits der Bremswulst
27 auf die Lauffläche des Laufrades 22 gedrückt wird
und andererseits der Haltezapfen 30 in eine der Ausnehmungen 35 in der Drehlagerschale 19 gelangt. Wenn
sich jedoch einer der Stege zwischen den Ausnehmungen
35 der Drehlagerschale 19 in einer solchen Stellung
befindet, daß der Haltezapfen 30 nicht sofort in eine
der Ausnehmungen 35 eindringen kann, so taucht der
Haltezapfen 30 gegen die Kraft der Druckfeder 32 um das
Maß der Wandstärke der Drehlagerschale in die Aufnahmebohrung im Sperrarm 25 des Blockierhebels 23 ein. Dadurch ist eine Sperrbereitschaftslage des Haltezapfens
30 erzielt, der sofort nach einer entsprechend kleinen
Verschwenkung der Radgabel in die nächste Ausnehmung 35
infolge der Kraft der Druckfeder 32 eindringen kann und
damit dann die Schwenkbewegung feststellt. Bei dem aus
den Fig. 1 und 2 ersichtlichen Ausführungsbeispiel ist
der Abstand zwischen der Anlenkachse 38 und dem Scheitelpunkt des Stütznockens 39 so groß gewählt, daß eine
Totalfeststellung der Laufrolle erfolgt, d.h. es wird
einerseits das Laufrad 22 an seiner Drehbewegung gehindert und andererseits wird eine Verschwenkung der
Radgabel unterbunden.

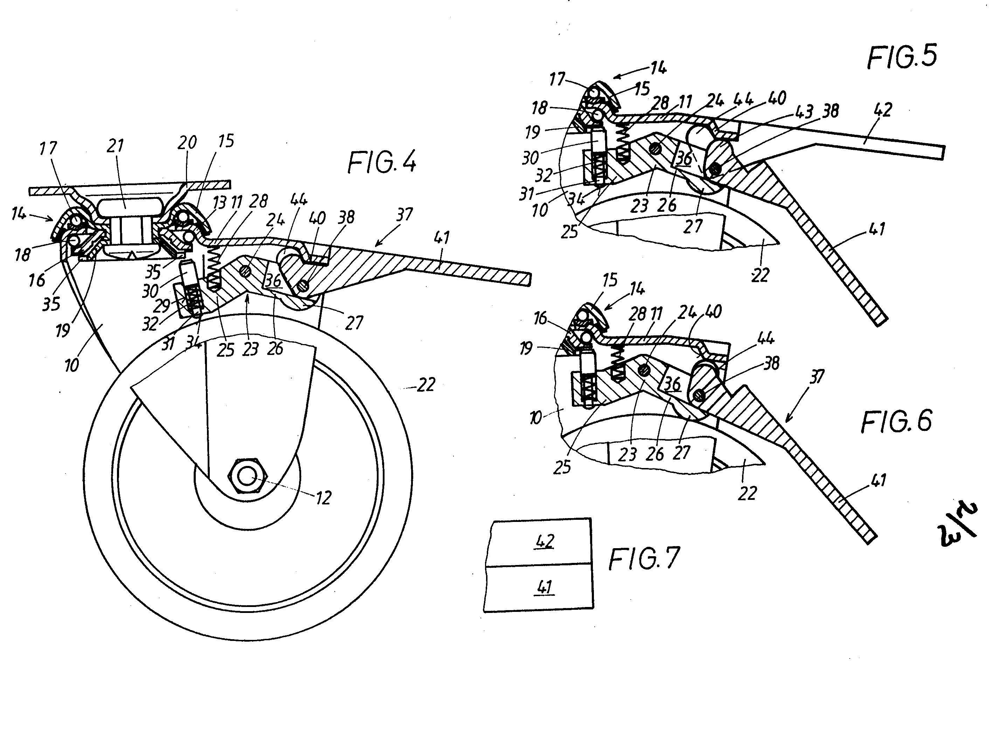

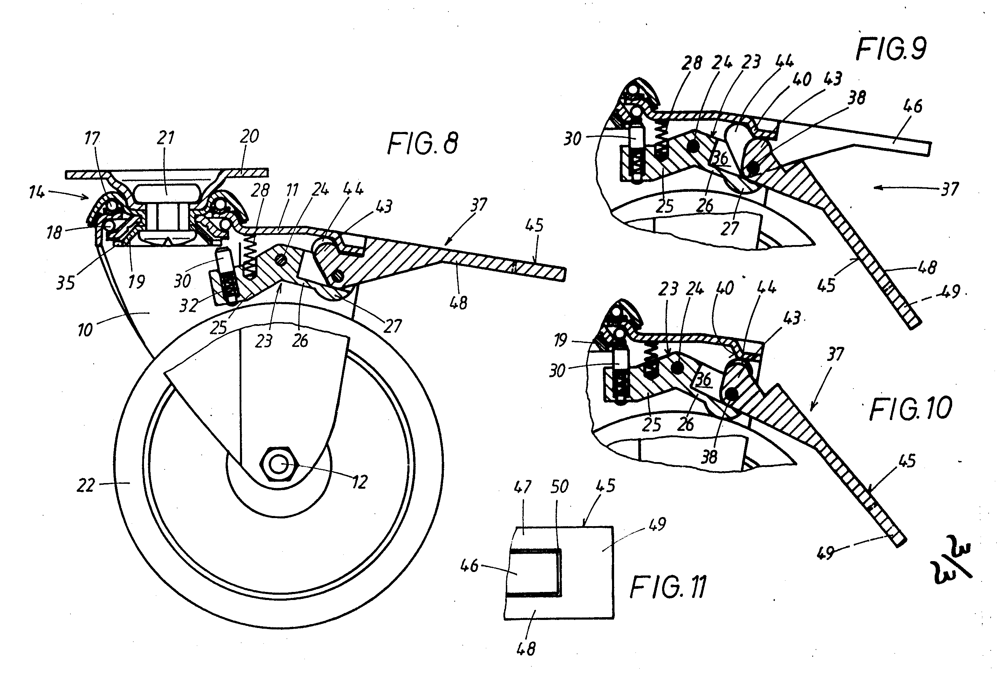

Bei dem aus den Fig. 4 bis 7 ersichtlichen Ausführungsbesipiel entspricht der Aufbau der Lenkrolle im wesentlichen dem Aufbau der aus den Fig. 1 und 2 ersichtlichen Lenkrolle. Unterschiedlich ist bei dem Ausführungsbeispiel gemäß den Fig. 4 bis 7 jedoch der Aufbau und die Wirkungsweise des Fußschalthebels 37. Wie insbesondere aus den Fig. 5 und 7 ersichtlich ist, besteht der F=ußschalthebel aus einem Schwenkfußhebel 41 und einem Bremsfußhebel 42. Sowohl der Schwenkfußhebel 41 als auch der Bremsfußhebel 42 greifen in die Vertiefung 36 des Bremsarmes 26 ein und sind gemeinsam auf der im Bremsarm 26 festgelegten Anlenkachse 38, jedoch unabhängig voneinander schwenkbar gelagert. Sowohl der Schwenkfußhebel 41 als auch der Bremsfußhebel 42 weisen Stütznocken 43 bzw. 44 auf, wobei jedoch der Stütznocken 43 des Schwenkfußhebels 41 einen geringeren Abstand von der Anlenkachse 38 bis zu seinem Scheitelpunkt aufweist, als der Stütznocken 44 des Bremsfußhebels 42. Nehmen der Schwenkfußhebel 41 und der Bremsfußhebel 42 die aus Fig. 4 ersichtliche deckungsgleiche Freigabelage ein, so kann einerseits das Laufrad 22 ungehindert gedreht werden, und andererseits läßt sich die Radgabel 10 gegenüber der Fußplatte 20 ungehindert verschwenken. Wenn nun - wie in Fig. 5 dargestellt - der Schwenkfußhebel 41 niedergedrückt wird, so wird auch infolge der Abstützung des Stütznockens 43 an der Stützkurve 40 der Blockierhebel 23 im Uhrzeigersinn verschwenkt, so daß der Haltezapfen 30 in seine Sperrlage in eine der Ausnehmungen 35 der Drehlagerschale 90 oder aber zumindest in eine Sperrbereitschaftslage gelangt, so daß die Schwenkbewegung der Radgabel unterbunden wird. Die Scheitelhöhe des Stütznockens 43 ist dabei jedoch so gewählt, daß zwischen dem Bremswulst 27 und der Lauffläche des Laufrades 22 ein geringer Spielraum verbleibt, so daß sich das Laufrad 22 weiterhin drehen kann. Erst wenn anschließend
- wie in Fig. 6 dargestellt - auch der Bremsfußhebel 42
nach unten gedrückt wird, findet über dem Bremswulst 27
eine Blockierung des Laufrades 22 statt, weil das
Scheitelmaß des Stütznockens 44 um etwas mehr als das
zuvor vorhandene Spiel zwischen dem Bremswulst 27 und
der Lauffläche des Laufrades 22 größer ist als das
Scheitelmaß des Stütznockens 43 am Schwenkfußhebel 41.
Wenn demnach der Schwenkfußhebel 41 und auch der Bremsfußhebel 42 niedergedrückt sind, ist sowohl die Schwenkbewegung der Radgabel 10 als auch die Drehbewegung des
Laufrades 22 blockiert.

Das aus den Fig. 8 bis 11 ersichtliche Ausführungsbeispiel einer Lenkrolle entspricht im wesentlichen in
seinem Aufbau und seiner Funktionsweise dem aus den
Fig. 4 bis 7 ersichtlichen Ausführungsbeispiel. Unterschiedlich ist auch hier die Gestaltung des Fußschalthebels 37. Der Fußschalthebel besteht auch bei dieser
dritten Ausführungsform aus einem Schwenkfußhebel 45
und einem Bremsfußhebel 46. Der Schwenkfußhebel 45 ist
gabelförmig gestaltet und weist zwei Gabelschenkel 47
und 48 auf, die am freien Ende des Schwenkfußhebels 45
durch eine Wandbrücke 49 miteinander verbunden sind.
Die der Wandbrücke 49 abgekehrten Enden der Gabelschenkel 47 und 48 sind einerseits auf der die Vertiefung
36 im Bremsarm 26 des Blockierhebels 23 durchquerenden
Anlenkachse 38 gelagert und weisen jeweils einen Stütznocken 43 auf. Die Gabelschenkel 47 und 48 umschließen
zusammen mit der Wandbrücke 49 einen Freiraum 50, in
welchem der Bremsfußhebel 46 ebenfalls auf der Anlenkachse 38 schwenkbar untergebracht ist. Auch der Bremsfußhebel 46 weist einen Stütznocken 44 auf, dessen
Abstand zwischen seinem Scheitelpunkt und der Anlenkachse 38 größer ist als der Abstand vom Scheitelpunkt beider Stütznocken 43 bis zur Anlenkachse 38. Infolgedessen ist auch bei diesem Ausführungsbeispiel bei nur niedergedrücktem Schwenkfußhebel 45 über den in die Schlitze 35 der Drehlagerschale 19 eindringenden Haltezapfen 30 am Sperrarm 25 des Blockierhebels 23 die Radgabel an ihrer Drehung gegenüber der Fußplatte 20 gehindert, so daß die Laufrichtung festgestellt ist. Erst wenn auch der Bremsfußhebel 46 in die aus Fig. 10 ersichtliche Lage niedergedrückt wird, so kommt auch neben der Arretierwirkung des Haltebolzens 30 der Bremsfuß 27 am Bremsarm 26 des Blockierhebels 23 in Anlage an der Lauffläche des Laufrades 22, so daß auch das Laufrad an seiner Drehbewegung gehindert wird und somit eine Totalfeststellung der Lenkrolle erfolgt. Die Funktionen laufen ebenfalls nacheinander, wie bei dem aus den Fig. 4 bis 7 ersichtlichen Ausführungsbeispiel, unter Inanspruchnahme der gleichen Bauteile ab. Zur Lösung der Totalfeststellung ist der Fußschalthebel 37 bzw. die den Fußschalthebel bildenden Schwenkfußhebel 41, 45 bzw. Bremsfußhebel 42, 46 in die aus den Fig. 1, 4 bzw. 8 ersichtliche Lage hochzuziehen. Dies kann ohne Schwierigkeiten mit der Fußspitze durch Unterfassen der Hebel geschehen.

Wie bereits erwähnt, ist die Erfindung auf die oben beschriebenen Ausführungsformen keinesfalls begrenzt, welche die Erfindung nur beispielsweise wiedergeben. So sind vielmehr noch mancherlei Änderungen und andere Ausführungen der Erfindung denkbar.

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 55 70 22/23/24 · Telex 8 591 606 wpat

0141866

37                                    5600 Wuppertal 2, den

<u>Kennwort:</u> "Federbolzenfeststeller"


Albert Schulte Söhne GmbH & Co.,
Remscheider Str. 25, 5632 Wermelskirchen

---

B e z u g s z e i c h e n l i s t e :

---

| | | | |
|---|---|---|---|
| 10 | Radgabel | 32 | Druckfeder |
| 11 | Gabelrücken | 33 | Loch |
| 12 | Laufradachse | 34 | Haltekopf |
| 13 | Aufwölbung | 35 | Ausnehmung/Schlitz |
| 14 | Gabelrückenlager | 36 | Vetiefung |
| 15 | Abdeckschale | 37 | Fußschalthebel |
| 16 | Kugellagerschale | 38 | Anlenkachse |
| 17 | Kugelkranz | 39 | Stütznocken |
| 18 | Kugelkranz | 40 | Stützkurve |
| 19 | Drehlagerschale | 41 | Schwenkfußhebel |
| 20 | Fußplatte | 42 | Bremsfußhebel |
| 21 | Nietzapfen | 43 | Stütznocken |
| 22 | Laufrad | 44 | Stütznocken |
| 23 | Blockierhebel | 45 | Schwenkfußhebel |
| 24 | Achse | 46 | Bremsfußhebel |
| 25 | Sperrarm | 47 | Gabelschenkel |
| 26 | Bremsarm | 48 | Gabelschenkel |
| 27 | Bremswulst | 49 | Wandbrücke |
| 28 | Rückstellfeder | 50 | Freiraum |
| 29 | Aufnahmebohrung | | |
| 30 | Haltezapfen/Stufenbolzen | | |
| 31 | Schaft von 30 | | |

**PATENTANWÄLTE**

**DIPL.-PHYS. BUSE · DIPL.-PHYS. MENTZEL · DIPL.-ING. LUDEWIG**
Unterdörnen 114 · Postfach 200210 · 5600 Wuppertal 2 · Fernruf (0202) 55 70 22/23/24 · Telex 8 591 606 wpat

0141866

37                                              5600 Wuppertal 2, den

<u>Kennwort:</u> "Federbolzenfeststeller"

Albert Schulte Söhne GmbH & Co.,
Remscheider Str. 25, 5632 Wermelskirchen

A n s p r ü c h e :

1.) Lenkrolle für verfahrbare Gegenstände, mit einer
Feststelleinrichtung zum Blockieren des Laufrades
und/oder der Schwenkbewegung der Laufradgabel,
in deren Höhlung unter dem Gabelrücken ein zweiseitiger, einen Bremsarm und einen Sperrarm aufweisender, im Lösesinne federbelasteter Blockierhebel schwenkbar gelagert ist, der über einen
daran angelenkten, im Bereich dieser Gelenkverbindung einen gegen eine Stützkurve des Gabelrückens anliegenden Stütznocken aufweisenden
Fußschalthebel in eine sowohl das Laufrad als
auch die Radgabel gegenüber einer Drehlagerschale
des Gabelrückenlagers blockierende Sperrlage und
in eine Freigabelage überführbar ist,

d a d u r c h   g e k e n n z e i c h n e t ,

daß der Blockierhebel (23) an seinem die Schwenkbewegung feststellenden Sperrarm (25) einen im
Sperrsinn elastisch belastbaren Haltezapfen (30)
aufweist, der in Ausnehmungen (35) der Lagerschale (19) einrückbar ist.

2.) Lenkrolle nach Anspruch 1, dadurch gekennzeichnet, daß der Haltezapfen (30) aus einem Stufenbolzen gebildet ist, dessen abgestufter Schaft (31) von einer Druckfeder (32) umfaßt ist, die sich einerends an der Abstufung des Haltezapfens (30) und andernends am Grund einer Aufnahmebohrung (29) im Blockierhebel (23) abstützt,und der abgestufte Schaft (31) ein Loch (33) im Blockierhebel (23) durchdringt und mit einem Haltekopf (34) hintergreift.

3.) Lenkrolle nach Anspruch 1 und/oder 2, dadurch gekennzeichnet, daß die Ausnehmungen (35) in der Lagerschale (19) von an deren Randbereich auf gleichem Durchmesser gleichmäßig verteilt angeordneten, zahnlückenartigen, nach außen offenen Schlitzen gebildet sind.

4.) Lenkrolle nach einem oder mehreren der vorhergehenden Ansprüche, dadurch gekennzeichnet, daß der am Bremsarm (26) angelenkte Fußschalthebel (37) aus einem die Sperrung der Schwenkbewegung bewirkenden Schwenkfußhebel (41) und aus einem die Feststellung des Laufrades (22) bewirkenden Bremsfußhebel (42) gebildet ist.

5.) Lenkrolle nach Anspruch 4, dadurch gekennzeichnet, daß der Schwenkfußhebel (41) und der Bremsfußhebel (42) auf gemeinsamer Anlenkachse (38) gelagert sind und der Stütznocken (44) des Bremsfußhebels (42) vom Nockenscheitel bis zur Anlenkachse einen größeren Abstand aufweist als der Stütznocken (43) des Schwenkfußhebels (42).

6.) Lenkrolle nach Anspruch 5, dadurch gekennzeichnet, daß der Schwenkfußhebel (41) und der Bremsfußhebel (42) nebeneinander auf der Anlenkachse (38) gelagert sind.

7.) Lenkrolle nach Anspruch 5, dadurch gekennzeichnet, daß der Schwenkfußhebel (45) gabelartig gestaltet ist und in seinem Freiraum zwischen den durch eine Wandbrücke (49) verbundenen Gabelschenkeln (47, 48) den gegenüber dem Schwenkfußhebel (45) verkürzten Bremsfußhebel (46) aufnimmt.

FIG.1

FIG.3

FIG.2

0141866

0141866

2/3

FIG.4 FIG.5 FIG.6 FIG.7

FIG.9

FIG.8

FIG.10

FIG.11

0141866

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-2 345 442  (WINTER)  * Seite 2, linke Spalte, Zeilen 43-55; Figuren 6-8 *  --- | 1,2,4 | B 60 B   33/02 |
| Y | FR-A-2 253 639  (HAPPE)  * Seite 4, Zeile 24 - Seite 5, Zeile 2; Seite 6, Zeile 12 - Seite 7, Zeile 12; Figuren 1-3,6,7 *  --- | 1,2,4 | |
| A | CH-A- 549 483  (HUBER)  * Spalte 1, Zeilen 49-57; Figur 1 *  --- | 1 | |
| A | DE-A-2 203 919  (SCHULTE)  * Seite 7, Zeilen 3-14; Figur 1 *  --- | 1 | |
| A | FR-A-2 226 292  (SCHULTE)  * Seite 4, Zeilen 20-32; Figur 1 *  --- | 1,7 | RECHERCHIERTE SACHGEBIETE (Int. Cl. ³)  B 60 B   33  B 62 B    5 |
| A | DE-A-1 580 179  (SCHULTE)  * Seite 6, Zeile 26 - Seite 7, Zeile 10; Figuren 13-16,21 *  --- | 1,4 | |
| A | FR-A-2 350 972  (MARTI)  --- | | |
| A | US-A-2 505 852  (BUDNICK)  ---        -/- | | |

Der vorliegende Recherchenbericht wurde für alle Patentansprüche erstellt.

| Recherchenort | Abschlußdatum der Recherche | Prüfer |
|---|---|---|
| DEN HAAG | 20-07-1984 | AYITER I. |

0141866

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 583 858 (KOSTOLECKI) | | |

-----

**RECHERCHIERTE SACHGEBIETE (Int. Cl. ³)**

Der vorliegende Recherchenbericht wurde für alle Patentansprüche erstellt.

| Recherchenort | Abschlußdatum der Recherche | Prüfer |
|---|---|---|
| DEN HAAG | 20-07-1984 | AYITER I. |